# EUROPÄISCHE PATENTSCHRIFT

(11) **EP 1 757 466 B1**
(45) Veröffentlichungstag und Bekanntmachung des Hinweises auf die Patenterteilung: **21.10.2009**
(21) Anmeldenummer: 06016502.4
(22) Anmeldetag: 08.08.2006
(51) Int. Cl.: B60D 1/52

(54) **Anhängerkupplung für Kraftfahrzeuge**
Hitch for vehicles
Attelage pour véhicules

(30) Priorität: 25.08.2005 DE 102005040181
(43) Veröffentlichungstag der Anmeldung: 28.02.2007
(73) Patentinhaber: WESTFALIA - Automotive GmbH, 33378 Rheda-Wiedenbrück (DE)
(72) Erfinder: Büscher, Maik, 33378 Rheda-Wiedenbrück (DE); Hermbusch, Gerhard, 33449 Langenberg (DE)
(74) Vertreter: Bregenzer, Michael

(56) Entgegenhaltungen:
- EP-A- 0 934 838
- DE-A1- 10 032 002
- DE-U1- 8 716 502
- DE-U1- 9 105 268
- GB-A- 2 205 291

## Beschreibung

Die Erfindung betrifft eine Anhängerkupplung für Kraftfahrzeuge, insbesondere Personenkraftwagen gemäß dem Oberbegriff des Anspruchs 1.

Eine gattungsgemäße Anhängerkupplung ist beispielsweise aus der britischen Patentanmeldung GB 2 205 29 A bekannt. Der Hebel steht vor eine Drehwelle vor, an der ein Ritzel angeordnet ist. Dieses Ritzel wird mit einer Zahnstange am Ende eines Verriegelungsbolzens in Eingriff oder außer Eingriff gebracht.

Ansonsten ist es üblich, zur Betätigung von bolzenartigen Sperr- oder Spannelemente Drehknäufe vorzusehen, wie beispielsweise bei Anhängerkupplungen gemäß dem deutschen Gebrauchsmuster DE 91 05 268 U1, gemäß DE 100 32 002 A1 oder EP 0 934 838 A1.

Bei einer Anhängerkupplung gemäß dem deutschen Gebrauchsmuster DE 87 16 502 U1 ist in einer langgestreckten Bohrung des Kupplungsarmes ein Sperr- oder Spannelement verschiebbar gelagert, das an seinem Verriegelungsende einen konisch gestalteten Kopf aufweist, der auf eine Verspannrampe an der Steckhalterung beziehungsweise Steckaufnahme aufläuft. Das Sperrelement hat eine Nut, in die ein Hebel zum Betätigen des Sperrelements eingreift.

Auch aus dem deutschen Gebrauchsmuster 88 15 747 U1 geht eine Anhängerkupplung mit einem Verriegelungsbolzen, der ein Längsbetätigungsglied bildet, hervor. Der Betätigungsbolzen wird durch einen am Kupplungsarm schwenkbar gelagerten Bedienhebel betätigt, der in eine Ausnehmung an dem Verriegelungsbolzen eingreift.

Die axiale Verschiebung des Längsbetätigungsgliedes lässt sich mit den bekannten Hebellösungen nicht exakt bewerkstelligen. Allenfalls durch komplizierte Berührungskonturen an einer Betätigungsausnehmung des Längsbetätigungsglieds beziehungsweise am Betätigungsende des Bedienhebels wäre eine einigermaßen gleichförmige Bewegung des Längsbetätigungsglieds in Abhängigkeit von einer Schwenkbewegung des Betätigungshebels realisierbar. Dies ist jedoch kompliziert und verschleißanfällig.

Es ist daher die Aufgabe der vorliegenden Erfindung, eine verbesserte Hebelbetätigung einer verriegelungsanordnung zum Verriegeln eines Kupplungsarms an einem fahrzeugseitigen Halter bereitzustellen.

Zur Lösung der Aufgabe ist eine Anhängerkupplung gemäß der technischen Lehre des Anspruchs 1 vorgesehen.

An einem Endbereich des Betätigungshebels ist ein Ritzelabschnitt angeordnet, der mit einem Zahnabschnitt an dem Längsbetätigungsglied kämmt.

Zwischen dem Betätigungshebel und dem Längsbetätigungsglied, beilspielsweise einem Sperrbolzen, ist eine zwangsführung vorhanden. Dadurch überträgt sich eine Schwenkbetätigung des Hebels zweckmäßigerweise gleichförmig auf das Längsbetätigungsglied. Der Bediener sieht an der Hebelstellung jederzeit, in welcher Stellung sich das Längsbetätigungsglied befindet, und somit, ob die Verriegelungsanordnung den Kupplungsarm an dem fahrzeugseitigen Halter verriegelt oder nicht. Dies ist insbesondere deshalb wichtig, weil eine zuverlässige Verriegelung des Kupplungsarms am Halter für die Betriebssicherheit der Anhängerkupplung wesentlich ist.

Der Betätigungshebel wirkt unmittelbar auf das Längsbetätigungsglied.

Es ist bevorzugt, dass der Ritzelabschnitt des Betätigungshebels mit dem Zahnabschnitt des Längsbetätigungsglieds stets in Eingriff bleibt. Der Ritzelabschnitt kann z.B. in der Art eines Zahnkranzes an einem zweckmäßigerweise runden Außenumfang des Betätigungshebels angeordnet sein. Der Ritzelabschnitt kann auch an einer Seitenfläche des Betätigungshebels angeordnet sein.

Der Endbereich des Betätigungshebels ist z.B. als eine Walze ausgestaltet. Der Ritzelabschnitt ist an einem Außenumfang oder einer Seitenfläche der Walze angeordnet. Die Walze kann flach sein, so dass der den Ritzelabschnitt aufweisende Außenumfang schmal ist.

Neben dem Ritzelabschnitt können am gezahnten Endbereich des Betätigungshebels auch mindestens einer, zweckmäßigerweise zwei ungezahnte Bereiche vorhanden sein, die mit einem oder zwei ungezahnten Bereichen neben dem Zahnabschnitt des Längsbetätigungsgliedes zusammenwirken.

Der Zahnabschnitt des Längsbetätigungsglieds kann beispielsweise durch Ausfräsungen gebildet sein. Beispielsweise bei einer spanabhebenden Drehbearbeitung ist es vorteilhaft, dass der Zahnabschnitt durch in Längsrichtung aneinandergereihte Umfangsnuten gebildet ist. Die Umfangsnuten sind zweckmäßigerweise äquidistant.

Der Betätigungshebel hat vorteilhaft einen Betätigungsbereich zur Betätigung durch einen Bediener und einen wirkbereich, der mit dem Zahngetriebe zusammenwirkt oder einen Bestandteil des Zahngetriebes bildet. Am Betätigungsbereich ist z.B. eine Betätigungshandhabe, z.B. ein Knauf oder Handgriff, angeordnet. Auch der Betätigungshebel selbst kann eine Betätigungshandhabe bilden.

Zwischen dem Betätigungsbereich und dem Wirkbereich verläuft eine Schwenkachse des Betätigungshebels. Eine Betätigungshebellänge, die als ein Abstand zwischen der Schwenkachse und dem Betätigungsbereich definiert ist, ist vorteilhaft größer als eine Wirkhebellänge, die als ein Abstand zwischen der Schwenkachse und dem Wirkbereich definiert ist. Eine auf den Betätigungsbereich wirkende Bedienkraft ist somit im Wirkbereich verstärkt.

Der Betätigungshebel umfasst vorteilhaft eine Stange oder einen Stangenabschnitt. Der Betätigungsbereich und der wirkbereich sind vorteilhaft an einander entgegengesetzten Endbereichen des Stangenabschnitts oder der Stange angeordnet oder werden durch die Endbereiche gebildet.

Der Betätigungshebel ist vorteilhaft an seinem dem Zahngetriebe zugeordneten Endbereich schwenkbar gelagert.

Der Betätigungshebel hat vorteilhaft einen vor den Kupplungsarm vorstehenden Betätigungsarm. Zweckmäßigerweise ist der Betätigungsarm stangenartig oder umfasst den Stangenabschnitt.

Der Betätigungshebel ist zweckmäßigerweise nahe bei dem Wirkbereich oder am Wirkbereich drehbar gelagert.

Vorteilhaft sind an dem Betätigungshebel, z.B. dem Wirkbereich, Lagervorsprünge, z.B. Lagerbolzen, oder Lageraufnahmen, z.B. Lagerschalen, angeordnet.

Der Betätigungshebel ist vorteilhafterweise an einem am Kupplungsarm angeordneten Lagergehäuse schwenkbar gelagert. Das Lagergehäuse kann z.B. aus Kunststoff und/oder Metall sein. Es versteht sich, dass auch einfache Lagerböcke zur Lagerung des Betätigungshebels ausreichend wären. Das Lagergehäuse ist beispielsweise an den Kupplungsarm angeschraubt. Das Lagergehäuse und/oder die Lagerböcke können auch einstückig durch den Kupplungsarm gebildet sein. Das Lagergehäuse kann z.B. eine den Endbereich des Betätigungshebels insgesamt schwenkbar lagernde Lageraufnahme oder -schale aufweisen. Ferner können Lagervorsprünge oder Lagerkonturen zur Schwenklagerung des Betätigungshebels an dem Lagergehäuse vorgesehen sein.

Der Betätigungshebel steht zweckmäßigerweise quer zu einer Richtung, in der das Kopfstück, an dem Kupplungsarm angeordnet ist, seitlich vor den Kupplungsarm vor. Wenn der Kupplungsarm an dem fahrzeugseitigen Halter montiert ist, steht das Kopfstück beispielsweise vertikal nach oben. Der Betätigungshebel steht vorteilhafterweise horizontal vor den Kupplungsarm vor. Dies ermöglicht eine besonders kompakte Bauweise des Kupplungsarmes. Sofern zwischen Fahrzeug und Kupplungskopf genügend Einbauraum vorhanden ist, kann der Betätigungshebel ohne weiteres aber auch an der Oberseite des Kupplungsarmes angeordnet sein, das heißt im Wesentlichen vertikal nach oben vorstehen.

Zwar wäre es prinzipiell möglich, dass die Verriegelungsanordnung beispielsweise Keil-Verriegelungselemente, ein Keilgetriebe, Rastnasen, Walzenelemente oder dergleichen enthält. Zweckmäßigerweise sind jedoch eine oder mehrere Kugeln als Verriegelungselemente vorgesehen, die durch das Längsbetätigungsglied in seiner Verriegelungsstellung nach außen verdrängt werden, sodass sie teilweise vor eine Außenkontur des Steckendes vorstehen und dabei in eine Ausnehmung der Verriegelungseinrichtung an der fahrzeugseitigen Steckhalterung eingreifen. Die Verriegelungselemente umfassen z.B. Kugeln, Walzen, Stifte oder dergleichen. Besonders bevorzugt sind mehrere Verriegelungselemente, insbesondere drei Verriegelungselemente. Die mindestens eine Ausnehmung kann beispielsweise eine Kugelkalotte sein. Besonders bevorzugt ist jedoch eine Umfangsnut.

Das Längsbetätigungsglied hat in seinem Verriegelungsbereich zum Betätigen des mindestens einen Verriegelungselements zweckmäßigerweise mindestens eine Schrägfläche. Das Längsbetätigungsglied ist z.B. im Bereich des mindestens einen Verriegelungselements zumindest abschnittsweise konisch. Ein Schrägflächenwinkel bzw. Konuswinkel ist bevorzugt, sodass beispielsweise Alterungstoleranzen ausgleichbar sind. Die mindestens eine Schrägfläche hat vorteilhaft eine selbsthemmend flache Neigung, so dass eine von den Verriegelungselementen auf das Längsbetätigungsglied rückwirkende Kraft keine Längsverlagerung des Längsbetätigungsglied in Richtung der Entriegelungsstellung bewirkt.

Das Längsbetätigungsglied wird vorteilhaft durch eine Nachstelleinrichtung in der Verriegelungsstellung gehalten. Die Nachstelleinrichtung enthält z.B. eine Federanordnung und/oder ein pneumatisches Nachstellelement und/oder ein hydraulisches Nachstellelement und/oder ein elektrisches Nachstellelement.

Zweckmäßigerweise ist das Längsbetätigungsglied durch eine Federanordnung in die Verriegelungsstellung vorgespannt.

Das Längsbetätigungsglied durchdringt vorteilhaft die jeweilige Federanordnung.

Das Steckende ist zweckmäßigerweise stirnseitig geschlossen. Hierfür ist vorteilhafterweise ein Verschlusselement und/oder eine Dichtungsanordnung vorgesehen. Das Verschlusselement enthält beispielsweise eine Schraube und/oder ein Einsteckstopfen, beispielsweise aus Metall oder vorteilhaft aus einem elastischen Material, zum Beispiel Kunststoff. Dadurch werden die Komponenten im Innern des Kupplungsarmes, insbesondere die Verriegelungselemente und das Längsbetätigungsglied, vor Verschmutzungen geschützt. Das Schützen von mechanischen Komponenten im Innern des Kupplungsarmes durch geeignete Verschlusselemente, Dichtungen etc. stellt an sich schon eine eigenständige Erfindung dar.

Zum Verschließen des Kupplungsarmes zumindest im an dem Halter montierten Zustand des Kupplungsarmes ist zweckmäßigerweise ein Schloss an demselben angeordnet. Das Schloss ist mit einem entlang einer Einsteckachse in das Schloss einsteckbaren Schlüssel betätigbar. Vorteilhafterweise ist das Schloss an einer dem Betätigungshebel entgegengesetzten Seite des Kupplungsarmes angeordnet. Es wäre beispielsweise aber auch möglich, das Schloss in dem Lagergehäuse für den Betätigungshebel anzuordnen.

Der Schlüssel ist vorteilhafterweise nur in der Schließstellung des Schlosses von dem Schloss entfernbar. Diese Maßnahme stellt an sich schon eine eigenständige Erfindung dar, die auch bei solchen Anhängerkupplungen zweckmäßig ist, die zwar einen abnehmbaren Kupplungsarm haben, bei denen aber auch andere Bedienkonzepte für die Verriegelungsanordnung als der Bedienhebel, beispielsweise mit Drehknäufen oder Schiebeelementen, realisiert sind. Die Maßnahme verhindert, dass der Schlüssel verloren geht, wenn der Kupplungsarm von dem fahrzeugseitigen Halter entfernt ist.

Der Schlüssel hat zweckmäßigerweise eine kompakte Bedienhandhabe, die im in das Schloss eingesteckten Steckzustand des Schlüssels wenig vor das Schloss vorsteht. Die kompakte Bauweise der Bedienhandhabe verringert das Risiko, dass die Bedienhandhabe vom Bart des Schlüssels abbricht. Dies ist besonders vorteilhaft im Zusammenhang mit der vorbezeichneten Maßnahme, gemäß der der Schlüssel nur in der Schließstellung des Schlosses von dem Schloss entfernbar ist. Wenn ein Bediener den Kupplungsarm von dem fahrzeugseitigen Halter entfernt und beispielsweise im Gepäckraum seines Kraftfahrzeuges ablegt, verbleibt der Schlüssel am Schloss.

Die Bedienhandhabe kann beispielsweise eine runde, konische oder gestufte Außenkontur parallel zur Einsteckachse aufweisen. Besonders bevorzugt ist eine zylindrische Bauform der Bedienhandhabe.

Eine vorteilhafte Variante der Erfindung sieht vor, dass die Bedienhandhabe quer zur Einsteckrichtung flach ist. Eine konventionelle Bedienhandhabe, die wie bei den meisten Schlüsseln üblich beispielsweise Flachseiten parallel zur Einsteckrichtung aufweist, bricht leichter vom Schlüsselbart ab.

Einem Abbrechen der Bedienhandhabe vom Bart des Schlüssels wirkt auch entgegen, wenn eine Stirnfläche der Bedienhandhabe, an der der Bart des Schlüssels angeordnet ist beziehungsweise von der der Bart absteht, in dem Steckzustand des Schlüssels zumindest teilweise parallel nahe bei einer Stirnfläche des Schlosses angeordnet ist oder zumindest partiell daran anliegt. Selbst wenn Hebelkräfte auf die Bedienhandhabe wirken, führt dies nicht zum Abbrechen, weil die beiden Stirnflächen von Schloss und Bedienhandhabe dann zur Anlage kommen und die Bedienhandhabe sich an dem Einsteckbereich bzw. der Stirnfläche des Schlosses abstützt. Die beiden Stirnflächen können im Grunde genommen beliebige Konturen aufweisen, beispielsweise eine konische Außenkontur, die mit einer konischen Innenkontur zusammenwirkt, oder dergleichen. Besonders bevorzugt ist jedoch eine einfache plane Bauart beider Stirnflächen.

Ein Blockierteil des Schlosses ist in einer Schließstellung desselben vorteilhafterweise in einer Blockierstellung und blockiert dabei eine Verstellung des Längsbetätigungsglieds in die Entriegelungsstellung. Denkbar wäre es beispielsweise, dass das Schloss auf den Bedienhebel oder mit dem fahrzeugseitigen Halter unmittelbar zusammenwirkt. In einer bevorzugten Bauform aber steht das Blockierteil in seiner Blockierstellung in einen Führungskanal zur Führung des Längsbetätigungsgliedes derart vor, dass eine Verstellung des Längsbetätigungsglieds in Richtung der Entriegelungsstellung blockiert ist.

In einer im Ausführungsbeispiel näher beschriebenen Variante der Erfindung hat das Blockierteil dabei keine Haltefunktion, das heißt, das Längsbetätigungsglied wird nicht von dem Blockierteil sondern beispielsweise vom Betätigungshebel, von einer Federanordnung oder dergleichen in der Verriegelungsstellung gehalten. Denkbar ist es aber auch, dass das Blockierteil in seiner Blockierstellung direkt auf das Längsbetätigungsglied einwirkt, dort beispielsweise in eine Ausnehmung des Längsbetätigungsgliedes eingreift und/oder das Längsbetätigungsglied klemmt und/oder so hinter dem Längsbetätigungsglied in den Führungskanal vorsteht, dass das Längsbetätigungsglied von dem Blockierteil in seiner Verriegelungsstellung gehalten wird.

Es ist bevorzugt, dass das Längsbetätigungsglied außerhalb seiner Verriegelungsstellung eine Verstellung des Blockierteils in Richtung des Führungskanals hin zumindest teilweise verhindert. Wenn das Blockierteil nicht in den Führungskanal hineingelangen kann, ist zweckmäßigerweise der Schlüssel nicht vom Schloss abziehbar.

Eine einfache und zweckmäßige Bauform der erfindungsgemäßen Anhängerkupplung sieht vor, dass die Steckhalterung durch eine Steckaufnahme gebildet ist, in die das Steckende des Kupplungsarms eingesteckt wird. Prinzipiell denkbar wäre aber auch, dass das Steckende des Kupplungsarmes als eine Steckaufnahme ausgestaltet ist.

Vor den Außenumfang des Kupplungsarms steht zweckmäßigerweise mindestens ein Stützteil seitlich vor, das in eine Ausnehmung neben einer Einstecköffnung der Steckaufnahme eingreift, wenn der Kupplungsarm an dem fahrzeugseitigen Halter montiert ist. Das Stützteil beziehungsweise die Stützteile verhindern insbesondere ein Verdrehen des Kupplungsarms relativ zum fahrzeugseitigen Halter im montierten Zustand. Vorteilhaft korreliert eine Außenkontur des Stützteils mit einer Innenkontur der Ausnehmung. Zweckmäßigerweise sind die Außenkontur des Stützteils im wesentlichen rund und die Innenkontur der Ausnehmung im wesentlichen halbrund. Polygone Konturen sind möglich.

Eine besonders bevorzugte Ausgestaltung der erfindungsgemäßen Anhängerkupplung, die an sich eine eigenständige Erfindung darstellt, sieht vor, dass das mindestens eine Stützteil durch einen Querbolzen gebildet ist, der in eine Bohrung des Kupplungsarms quer zu seiner Längsrichtung eingesteckt ist. Der Querbolzen hat an seinem Außenumfang zweckmäßigerweise eine Riffelung oder Rändelung, die beim Einstecken in die Bohrung zumindest teilweise gequetscht wird und so einen festen Formschluss zwischen Querbolzen und Bohrung herstellt. Es ist vorteilhaft, wenn der Querbolzen zur Bildung eines Führungskanals zur Führung des Längsbetätigungsglieds zumindest teilweise durchbohrt ist. Dabei ist es vorteilhaft, wenn zumindest an einer Seite neben dem Führungskanal noch ein Teil des Bolzens sozusagen stehen bleibt. Prinzipiell denkbar ist es, dass der Bolzen aber vollständig aufgetrennt wird.

Nachfolgend wird ein Ausführungsbeispiel der Erfindung anhand der Zeichnung näher erläutert. Es zeigen:
- Figur 1: eine perspektivische Explosionsdarstellung einer erfindungsgemäßen Anhängerkupplung schräg von oben,
- Figur 2: eine Querschnittsansicht eines Steckendes eines Kupplungsarms sowie eines Halters der Anhängerkupplung gemäß Figur 1 entlang einer Linie II-II in entriegelter Stellung der Anhängerkupplung, und
- Figur 3: eine Querschnittsansicht etwa entsprechend Figur 2, wobei die Anhängerkupplung jedoch verriegelt ist.

Eine Anhängerkupplung 10 für Kraftfahrzeuge, insbesondere Personenkraftwagen, Lieferwagen oder dergleichen, hat einen am Kraftfahrzeug anordenbaren Halter 11 sowie einen an diesem Halter ansteckbaren und wieder entfernbaren Kupplungsarm 12. Der Kupplungsarm 12 ist an dem Halter 11 lösbar befestigbar. Der Kupplungsarm 12 ist z.B. geschmiedet und/oder gegossen und/oder insbesondere aus einem Rundmaterial, das vorteilhaft erst nach einer spanabhebenden Bearbeitung gebogen wird.

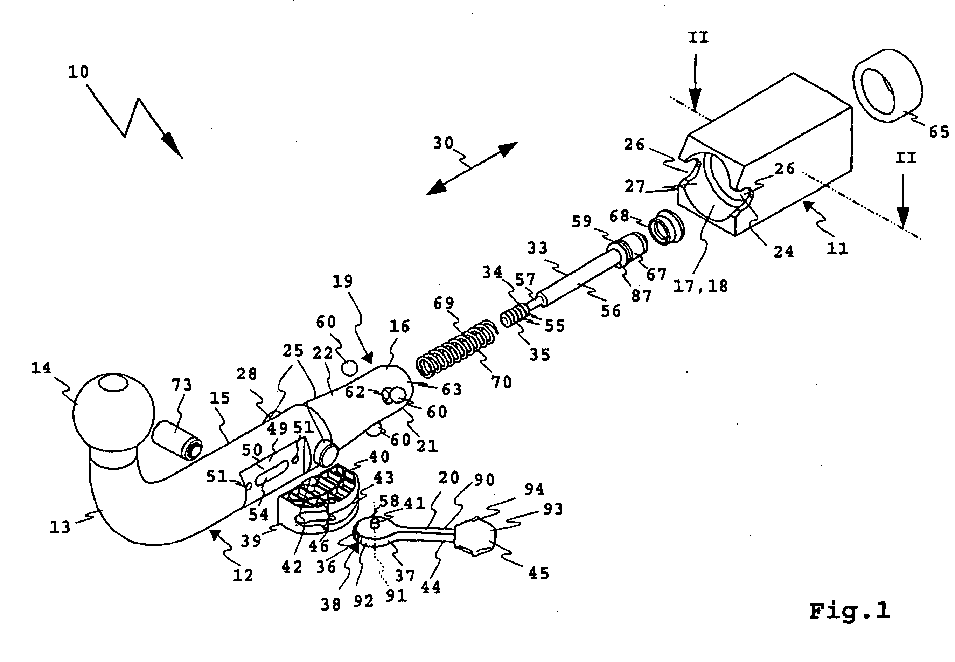

Der Halter 11 ist beispielsweise an einem hinteren Querträger des in der Figur nicht dargestellten Kraftfahrzeuges montiert, beispielsweise angeschraubt, angeschweißt oder in sonstiger Weise fest mit diesem verbunden. An einem freien Ende 13 trägt der Kupplungsarm 12 ein Kopfstück 14, beispielsweise einen Kugelkopf, zum lösbaren Befestigen eines nicht dargestellten Anhängers. Der Kupplungsarm 12 ist gebogen, sodass das freie Ende 13 beziehungsweise Kopfstück 14 in der in Figur 1 dargestellten Gebrauchslage nach oben vor einen mittleren Abschnitt 15 sowie ein Steckende 16 des Kupplungsarms 12 vorsteht.

Das Steckende 16 ist in eine Steckhalterung 17 mit einer Steckaufnahme 18 des Halters 11 einsteckbar. Im in den Halter 11 eingesteckten Zustand des Kupplungsarms 12, der einer Gebrauchsstellung der Anhängerkupplung 10 entspricht, ist der Kupplungsarm 12 mit Hilfe einer Verriegelungsanordnung 19 an dem Halter 11 verriegelbar. Die Verriegelungsanordnung 19 ist mit einem an dem Kupplungsarm 12 schwenkbar gelagerten Betätigungshebel 20 betätigbar.

In der Gebrauchsstellung der Anhängerkupplung 10 sind im Bereich des Steckendes 16 beziehungsweise der Steckhalterung 17 verschiedene Formschlüsse vorhanden. Beispielsweise liegen vordere und hintere Stützflächen 21, 22 des im Wesentlichen konischen Steckendes 16 an vorderen und hinteren Stützflächen 23, 24 der Steckaufnahme 18 insbesondere ringförmig an. Nahe bei der hinteren Stützfläche 22, das heißt in einem Übergangsbereich zwischen dem Steckende 16 und dem mittleren Abschnitt 15 des Kupplungsarms 12, stehen Stützteile 25 seitlich vor den Außenumfang des Kupplungsarms 12 vor, die in der Gebrauchsstellung des Kupplungsarms 12 in Ausnehmungen 26 neben einer Einstecköffnung 27 der Steckaufnahme eingreifen, wenn der Kupplungsarm 12 an dem fahrzeugseitigen Halter 11 montiert ist. Die Stützteile 25 haben eine runde Außenkontur, die mit halbrunden Innenkonturen der Ausnehmungen 26 korrelieren.

Zweckmäßigerweise sind die Stützteile 25 durch einen Querbolzen 28 gebildet, der in eine Bohrung 29 des Kupplungsarms 12 quer zu dessen Längsrichtung 30 eingesteckt ist. Prinzipiell wäre es zwar möglich, den Querbolzen 28 durch Kleben, Schweißen oder Verschrauben in der Bohrung 29 zu fixieren. Besonders bevorzugt ist jedoch, dass der Querbolzen 28 mit einer Rändelung oder Riffelung 31 versehen ist, die beim Einstecken in die Bohrung 29 zumindest teilweise gequetscht wird. Die Stützteile 25 stehen in der Gebrauchsstellung des Kupplungsarms 12 horizontal vor den Außenumfang des Kupplungsarms 12 vor.

Der Querbolzen 28 verläuft quer zu einem beispielsweise durch eine Bohrung hergestellten, in Längsrichtung 30 verlaufenden Führungskanal 32 zur Führung eines Längsbetätigungsglieds 33 der Verriegelungsanordnung 19. Der Querbolzen 28 ist beispielsweise ganz oder teilweise zur Herstellung des Führungskanals 32 durchbohrt. Das stangenartige Längsbetätigungsglied 33, das man auch als Sperrbolzen oder Sperrwelle bezeichnen könnte, hat an einem dem Betätigungshebel 20 zugeordneten Endbereich 34 einen Zahnabschnitt 35, mit dem ein Ritzelabschnitt 36 an einem Endbereich 37 des Betätigungshebels 20 kämmt. Der Ritzelabschnitt 36 und der Zahnabschnitt 35 gehören zu einem Zahngetriebe 38, über das der Betätigungshebel 20 mit dem Längsbetätigungsglied 33 kraftgekoppelt ist.

Der untere Endbereich 37 des Betätigungshebels 20 ist als eine Art Betätigungszahnrad ausgestaltet, das heißt, der Ritzelabschnitt 36 verläuft entlang eines Kreisbogens.

Der untere Endbereich 37 bildet einen Wirkbereich 92 zur Zusammenwirkung mit dem Zahngetriebe. Ein oberer Endbereich 93 des Betätigungshebels 20 bildet einen Betätigungsbereich 94.

Der Betätigungshebel 20 ist an beziehungsweise in einem am Kupplungsarm 12 angeordneten Lagergehäuse 39 schwenkbar gelagert. Das Lagergehäuse 39 ist beispielsweise aus Metall und/oder aus Kunststoff. Zwar könnte das Lagergehäuse 39 aus Vollmaterial bestehen. Besonders bevorzugt ist jedoch die vorliegende Bauform, bei der Hohlräume vorhanden sind und das Lagergehäuse 39 durch Verstärkungsrippen 40 verstärkt ist.

Der Betätigungshebel 20 ist an seinem unteren Endbereich 37 um eine Schwenkachse 91 drehbar gelagert. Der Ritzelabschnitt 36 verläuft als Kreisbogen um die Schwenkachse 91.

Am unteren Endbereich 37 sind seitlich Lagerbolzen 41 angeordnet, die in Lageraufnahmen 42 des Lagergehäuses 39 drehbar gelagert sind.

Der Betätigungshebel 20 ist im wesentlichen plattenartig.

Ein Stangenabschnitt oder Stangenteil 44 des Schwenkhebels oder Betätigungshebels 20 steht nach oben durch einen LängsSchlitz 43 vor das Lagergehäuse 39 vor. Das Stangenteil 44 bildet einen Betätigungsarm 90. Das Stangenteil 44 bildet vorteilhaft einstückig den Endbereich 37. Der Schlitz 43 verläuft in der Längsrichtung 30. An dem dem Endbereich 37 abgewandten Ende des Stangenteils 44 ist ein Betätigungsknauf 45 angeordnet.

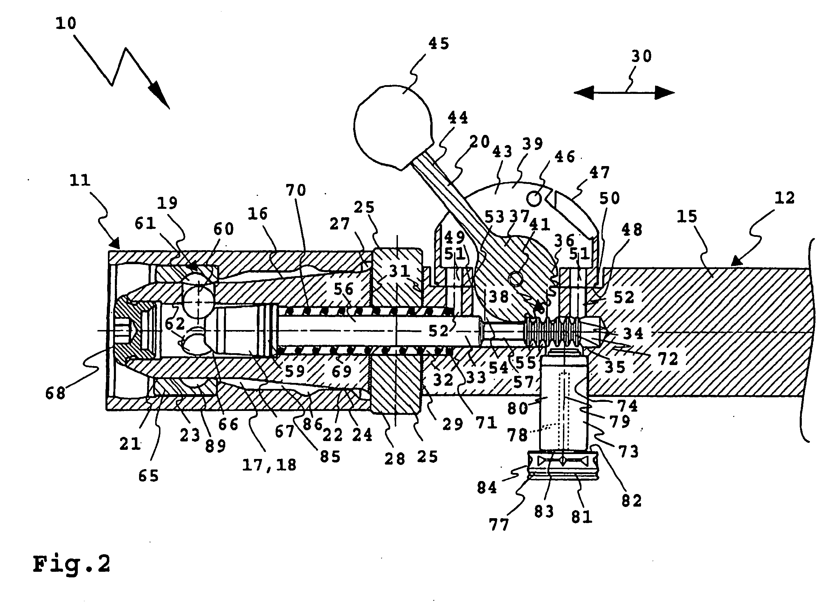

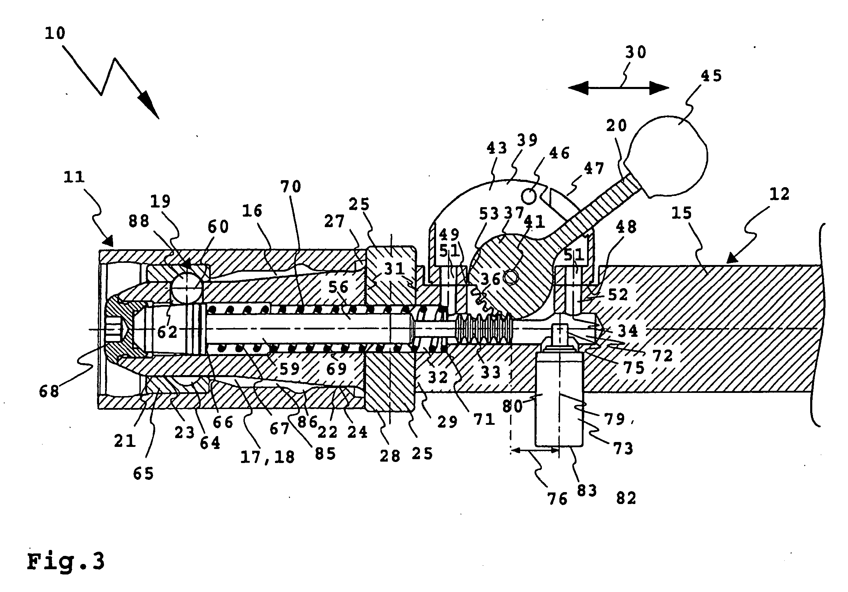

An dem Lagergehäuse 39 können nicht dargestellte Verrastungsmittel und/oder Verriegelungsmittel für den Betätigungshebel 20 vorgesehen sein. Beispielsweise sind im Bereich des Schlitzes 43 Ausnehmungen 46 vorhanden, in die Rastvorsprünge, insbesondere elastische und/oder verschiebliche Rastvorsprünge, die beispielsweise seitlich an dem Betätigungshebel 20 angeordnet sein können, eingreifen. Der Betätigungshebel 20 muss dann beispielsweise bei einem Verschwenkvorgang von der in Figur 3 gezeigten Verriegelungsstellung in Richtung der in Figur 2 gezeigten Freigabestellung der Verriegelungsanordnung 19 über den Widerstand der Rastmittel oder Verriegelungsmittel am Lagergehäuse 39 hinweg bewegt werden.

Der Betätigungshebel 20 steht horizontal seitlich vor den Kupplungsarm 12 beziehungsweise das Lagergehäuse 39 vor. Das Lagergehäuse 39 ist zweckmäßigerweise an seiner freien Seite 47, durch die der Betätigungshebel 20 nach außen vorsteht, rund, vorteilhafterweise entsprechend einem Kreisbogen, dessen Mittelpunkt die Schwenkachse des Betätigungshebels 20 ist. Mit einer Montageseite 48, die der Seite 47 entgegengesetzt ist, ist das Lagergehäuse 39 an einer Montagefläche 49 des Kupplungsarmes 12 montierbar. Die Montageseite 48 und die Montagefläche 49 sind zweckmäßigerweise plan. Im Ausführungsbeispiel ist die Montagefläche 49 die Bodenfläche einer Ausnehmung 50, beispielsweise einer Ausfräsung. Das Lagergehäuse 39 ist an den Kupplungsarm 12 angeschraubt, beispielsweise mit nicht dargestellten Bolzen, die in Bohrungen 51, 52 am Lagergehäuse 39 beziehungsweise Kupplungsarm 12 eingesteckt und/oder eingeschraubt sind. Zwischen den Bohrungen 51, 51 beziehungsweise 52, 52 verlaufen Längsschlitze 53, 54 an dem Lagergehäuse 39 beziehungsweise Kupplungsarm 12, die vom unteren Endbereich 37, insbesondere vom Ritzelabschnitt 36 des Betätigungshebels 20, durchdrungen sind, sodass der Ritzelabschnitt 36 in den Zahnabschnitt 35 des Längsbetätigungsglieds 33 eingreift.

Der Zahnabschnitt 35 ist durch in Längsrichtung 30 äquidistant aneinander gereihte Umfangsnuten 55 gebildet. Diese Bauform ist insbesondere bei einer spanabhebenden Drehbearbeitung des Längsbetätigungsglieds 33 vorteilhaft. Zwischen dem Zahnabschnitt 35 und einem mittleren Abschnitt 56 des Längsbetätigungsgliedes 33 befindet sich ein ungezahnter Bereich 57, mit dem ein ebenfalls ungezahnter Bereich 58 des Betätigungshebels 20 neben dem Ritzelabschnitt 36 zusammenwirkt.

Ein Verschwenken des Betätigungshebels 20 wird von dem Zahngetriebe 38 in eine Längsbewegung des Längsbetätigungsgliedes 33 übersetzt. Ein Verschwenken zum Steckende 16 hin bewirkt eine Entrieglung der Verriegelungsanordnung 19, wobei das Längsbetätigungsglied 33 vom Steckende 16 weg längsverstellt wird. Bei einer entgegengesetzten Schwenkbewegung des Betätigungshebels 20 wird das Längsbetätigungsglied 33 zum Steckende 16 hin längsverstellt und die Verriegelungsanordnung 19 verriegelt. Dazu ist allerdings kein aktiver Bedienereingriff erforderlich, da eine später noch erläuterte Nachstelleinrichtung 69 mit einer Federanordnung 70 die Längsbetätigungsglied 33 zum Steckende 16 hin verstellt und die Verriegelungsanordnung 19 sozusagen automatisch verriegelt.

Ein Kopf 59 an dem dem Endbereich 34 entgegengesetzten Verriegelungsende 63 des Längsbetätigungsglieds 33 verdrängt in der Verriegelungsstellung des Längsbetätigungsglieds 33 Verriegelungselemente 60, zweckmäßigerweise Kugeln 88, vor eine Außenkontur des Kupplungsarmes 12 beziehungsweise des Steckendes 16 vor, sodass die Verriegelungselemente 60 in eine Ausnehmung 61 des Halters 11 eingreifen, wobei der Kupplungsarm 12 am Halter 11 verriegelt wird. Die Verriegelungselemente 60 sind vorliegend drei Kugeln 88, die der Kopf 59 durch Bohrungen 62 am Verriegelungsende 63 teilweise hindurch nach radial außen verdrängt, sodass sie vor den Außenumfang beziehungsweise die Außenkontur des Verriegelungsendes 63 vorstehen und in die Ausnehmung 61 eingreifen. Das Längsbetätigungsglied 33 hält in seiner Verrieglungsstellung die Verriegelungselemente 60 in Eingriff mit der Ausnehmung 61, die eine den Verriegelungselementen 60 zugeordnete Verriegelungseinrichtung 89 des fahrzeugseitigen Halters 11 bildet. Die Bohrungen 62 sind so gestaltet, dass die Kugeln 88 beziehungsweise Verriegelungselemente 60 unverlierbar sind.

Die Ausnehmung 61 ist beispielsweise eine Ringnut 64 an der Innenseite eines Rings 65, der von der der Einstecköffnung 27 entgegengesetzten offenen Seite des Halters 11 in die Steckaufnahme 18 eingesetzt und dort befestigt ist.

Wenn das Längsbetätigungsglied 33 in seine Verrieglungsstellung verstellt wird, verdrängt zunächst ein konischer Abschnitt 66 des Kopfs 59 mit einem größeren Konuswinkel die Kugeln/Verriegelungselemente 60 in die Bohrungen 62 hinein beziehungsweise vor die Außenkontur des Steckendes 16 vor. Anschließend wirkt ein zwischen dem konischen Abschnitt 66 und dem mittleren Abschnitt 56 des Längsbetätigungsglieds 33 angeordneter konischer Abschnitt 67 mit einem kleinen Konuswinkel auf die Verriegelungselemente 60. Dieser kleine Konuswinkel ermöglicht es, ein Spiel beziehungsweise eine Toleranz auszugleichen, die sich beispielsweise durch Verschleißerscheinungen ergeben. Der konische Abschnitt 67 mit dem kleinen Konuswinkel verdrängt die Verriegelungselemente 60 beziehungsweise Kugeln 60 in ihre Verriegelungs-Endlage, bei der sie in der Ausnehmung 61 anliegen.

Der Führungskanal 32 ist stirnseitig mit einem Verschlusselement 68, beispielsweise einer Verschlussschraube, verschlossen. Dadurch sind die mechanischen Elemente im Innern des Kupplungsarms 12 vor Verschmutzung geschützt.

Die Nachstelleinrichtung 69 hält das Längsbetätigungsglied 33 in der in Figur 3 gezeigten Verriegelungsstellung und bewirkt vorteilhaft ein automatisches Verriegeln. Die Nachstelleinrichtung 69 enthält eine Federanordnung 70, insbesondere eine Schraubenfeder, die sich an dem Längsbetätigungsglied 33, im vorliegenden Fall einerseits an dem Kopf 59 und andererseits an einem Anschlag 71 im Bereich des Führungskanals 32, abstützt. Der Kopf 59 hat einen größeren Durchmesser als der mittlere Abschnitt 56, sodass dadurch ein Anschlag 87 für die Federanordnung 70 gebildet ist. Der Anschlag 71 ist dadurch gebildet, dass der Führungskanal 32 im Bereich des mittleren Abschnittes 56 des Längsbetätigungsglieds 33 einen größeren Durchmesser hat als in einem Bereich 72, der einen Bewegungsraum für den Endbereich 34 des Längsbetätigungsglieds 33 bildet.

Der Kupplungsarm 12 ist in seiner an dem Halter 11 montierten Stellung mit einem Schloss 73 verschließbar. Das Schloss 73 ist in einer Bohrung 74 des Kupplungsarms 12 angeordnet und dort unverlierbar befestigt, die quer zu dem Führungskanal 32 verläuft. Die Bohrung 74 ist im Bereich 72 des Führungskanals 32 angeordnet, insbesondere in dessen Endbereich. In der Schließstellung des Schlosses 73, die in Figur 3 gezeigt ist, steht ein Blockierteil 75 in den Führungskanal 32 vor, sodass ein Verstellen des Längsbetätigungsglieds 33 in seine Entriegelungsstellung blockiert ist. Man erkennt in Figur 3, dass zwischen dem sich in Verriegelungsstellung befindlichen Längsbetätigungsglied 33 und dem Blockierteil 75 ein Abstand 76 vorhanden ist. Der Abstand 76 ist ein Toleranzbereich, der es ermöglicht, dass die Anhängerkupplung 10 unabhängig von Verschleißzustand der Verriegelungsanordnung 19 verschließbar ist.

Das Schloss 73 ist mit einem Schlüssel 77 betätigbar beziehungsweise verschließbar, dessen Schlüsselbart 78 entlang einer Einsteckachse 79 in einen Zylinder 80 des Schlosses 73 einsteckbar ist. Im in den Zylinder 80 eingesteckten Zustand steht eine Bedienhandhabe 81 des Schlüssels 77 vor den Zylinder 80 vor.

Eine Stirnfläche 82 des Schlüssels 77 verläuft im Wesentlichen parallel zu einer Stirnfläche 83 des Zylinders 80, sodass sich die Stirnflächen 82, 83 bei einer Querbelastung quer zur Einsteckachse 79 aneinander abstützen können und der Schlüsselbart 78 von der Bedienhandhabe 81 nicht abbricht. Ferner ist die Bedienhandhabe 81 kompakt gestaltet. Sie steht nur unwesentlich über den Zylinder 80 hinaus und ist beispielsweise zylinderartig. Diese Maßnahmen sind insbesondere deshalb zweckmäßig, weil der Schlüssel 77 vorteilhafterweise nur im verschlossenen Zustand des Schlosses 73 von dem Zylinder 80 entfernbar beziehungsweise aus dem Zylinder 80 ausziehbar ist.

Am Außenumfang 84 der Bedienhandhabe 81 sind zweckmäßigerweise Symbole und/oder Riffelungen vorgesehen, die eine Schließbewegung und/oder Öffnungsbewegung symbolisieren beziehungsweise ein leichteres Ergreifen des Schlüssels 77 ermöglichen.

Das Schloss 73 ist an einer dem Betätigungshebel 20 entgegengesetzten Seite am Kupplungsarm 12 angeordnet, das heißt, das Schloss 73 ist ebenfalls horizontal orientiert.

Die Steckaufnahme 18 ist im Wesentlichen konisch. An einem mittleren Abschnitt 85, der nicht in Berührkontakt mit dem Steckende 16 des Kupplungsarms ist, sind zweckmäßigerweise Ausnehmungen 86 vorhanden, beispielsweise eine Ringnut, in die Rastvorsprünge oder sonstige Verankerungselemente eines in der Zeichnung nicht dargestellten Verschlussteils zum Verschließen der Steckaufnahme 18 bei Nichtgebrauch der Anhängerkupplung 10 eingreifen können.

Man erkennt in Figur 2, dass das Längsbetätigungsglied 33 außerhalb seiner Verriegelungsstellung eine Verstellung des Blockierteils 75 in Richtung des Führungskanals 32 verhindert. Solange das Blockierteil 75 in den Zylinder 80 zumindest partiell zurückverstellt ist, kann der Schlüssel 77 nicht vom Schloss 73 abgezogen werden.

## Patentansprüche

1. Anhängerkupplung für Kraftfahrzeuge, insbesondere Personenkraftwagen, mit einem Kupplungsarm (12), der an seinem freien Ende (13) ein Kopfstück (14) zum lösbaren Befestigen eines Anhängers trägt und an einem Steckende (16) an eine steckhalterung (17) eines an dem Kraftfahrzeug anordenbaren Halters (11) ansteckbar ist, und mit einer Verriegelungsanordnung (19) zur Verriegelung des Kupplungsarms (12) an dem Halter (11), wobei die Verriegelungsanordnung (19) einen an dem Kupplungsarm (12) schwenkbar gelagerten, einen vor den Kupplungsarm (12) vorstehende Betätigungsarm (90) aufweisen den Betätigungshebel (20) zum Betätigen eines Längsbetätigungsglieds (33) enthält, das in einer Längsrichtung (30) an dem Kupplungsarm (12) geführt zwischen einer Entriegelungsstellung und einer Verriegelungsstellung verstellbar ist und in der Verriegelungsstellung mindestens ein Verriegelungselement (60) des Kupplungsarms (12) mit einer zugeordneten Verriegelungseinrichtung (89) des fahrzeugseitigen Halters (11) verriegelt ist, wobei der Betätigungshebel (20) über ein Zahngetriebe (38) mit dem Längsbetätigungsglied (33) kraftgekoppelt ist, **dadurch gekennzeichnet, dass** an einem dem Längsbetätigungsglied (33) zugeordneten, dem Betätigungsarm (90) entgegengesetzten Endbereich (37) des Betätigungshebels (20) ein Zahn-Ritzelabschnitt (36) angeordnet ist, der mit einem Zahnabschnitt (35) an dem Längsbetätigungsglied (33) kämmt, so daß der Betätigungshebel (20) und unmittelbar auf das Längsbetätigunsglied (33) wirkt.

2. Anhängerkupplung nach Anspruch 1, **dadurch gekennzeichnet, dass** der Betätigungshebel (20) mindestens einen ungezahnten Bereich neben dem Zahn-Ritzelabschnitt (36) aufweist, der mit mindestens einem ungezahnten Bereich (57) neben Zahnabschnitt (35) des Längsbetätigungsglieds (33) zusammenwirkt.

3. Anhängerkupplung nach Anspruch 1 oder 2, **dadurch gekennzeichnet, dass** der Zahnabschnitt (35) des Längsbetätigungsglieds (33) durch in Längsrichtung (30) aneinander gereihte Umfangsnuten (55) gebildet ist.

4. Anhängerkupplung nach einem der vorhergehenden Ansprüche, **dadurch gekennzeichnet, dass** der Betätigungsarm (90) des Betätigungshebels (20) stangenartig ist.

5. Anhängerkupplung nach einem der vorhergehenden Ansprüche, **dadurch gekennzeichnet, dass** der Betätigungshebel (20) einen Stangenabschnitt (44) oder eine Stange umfasst, und dass ein Betätigungsbereich (94) zur Betätigung durch einen Bediener und ein Wirkbereich (92) zur Zusammenwirkung mit dem Zahngetriebe (38) an einander entgegengesetzten Endbereichen (37, 93) des Stangenabschnitts (44) oder der Stange angeordnet sind.

6. Anhängerkupplung nach einem der vorhergehenden Ansprüche, **dadurch gekennzeichnet, dass** ein Abstand zwischen einer Schwenkachse und einem Betätigungsbereich (94) des Betätigungshebels (20) eine Betätigungshebellänge definiert, dass ein Abstand zwischen der Schwenkachse und einem Wirkbereich (92) zur Zusammenwirkung mit dem Zahngetriebe (38) eine Wirkhebellänge definiert, und dass die Betätigungshebellänge größer als die Wirkhebellänge ist.

7. Anhängerkupplung nach einem der vorhergehenden Ansprüche, **dadurch gekennzeichnet, dass** der Betätigungshebel (20) nahe bei einem Wirkbereich (92) oder an einem Wirkbereich (92) zur Zusammenwirkung mit dem Zahngetriebe (38) drehbar gelagert ist.

8. Anhängerkupplung nach einem der vorhergehenden Ansprüche, **dadurch gekennzeichnet, dass** der Betätigungshebel (20) an einem am Kupplungsarm (12) angeordneten Lagergehäuse (39) schwenkbar gelagert ist.

9. Anhängerkupplung nach einem der vorhergehenden Ansprüche, **dadurch** gekennzeichet, dass der Betätigungshebel (20) quer zu einer Richtung, in der das Kopfstück (14) an dem Kupplungsarm (12) angeordnet ist, seitlich, insbesondere horizontal, vor den Kupplungsarm (12) vorsteht.

10. Anhängerkupplung nach einem der vorhergehenden Ansprüche, **dadurch gekennzeichnet, dass** das mindestens eine Verriegelungselement (60) mindestens eine Kugel (88) umfasst, die durch das Längsbetätigungsglied (33) in dessen Verriegelungsstellung verdrängt wird und teilweise vor eine Außenkontur des Steckendes (16) vorsteht und dabei in mindestens eine Ausnehmung (61) der Verriegelungseinrichtung (89) an der fahrzeugseitigen Steckhalterung (17) eingreift.

11. Anhängerkupplung nach einem der vorhergehenden Ansprüche, **dadurch gekennzeichnet, dass** zum Verschließen des Kupplungsarms (12) zumindest im an dem Halter (11) montierten Zustand des Kupplungsarms (12) an dem Kupplungsarm (12) ein Schloss (73) angeordnet ist, das mit einem entlang einer Einsteckachse (79) in das Schloss (73) einsteckbaren Schlüssel (77) betätigbar ist.

12. Anhängerkupplung nach Anspruch 11, **dadurch gekennzeichnet, dass** der Schlüssel (77) nur in der Schließstellung des Schlosses (73) von dem Schloss entfernbar ist.

13. Anhängerkupplung nach Anspruch 11 oder 12, **dadurch gekennzeichnet, dass** der Schlüssel (77) eine insbesondere kompakte Bedienhandhabe (80) aufweist, die im in das Schloss (73) eingesteckten Steckzustand des Schlüssels (77) vor das Schloss (73) vorsteht.

14. Anhängerkupplung nach Anspruch 13, **dadurch gekennzeichnet, dass** die Bedienhandhabe (80) quer zur Einsteckrichtung flach ist.

15. Anhängerkupplung nach Anspruch 13 oder 14, **dadurch gekennzeichnet, dass** die Bedienhandhabe (80) eine im wesentlichen runde oder konische oder gestufte Außenkontur parallel zur Einsteckachse (79) aufweist.

16. Anhängerkupplung nach einem der Ansprüche 13 bis 15, **dadurch gekennzeichnet, dass** die Bedienhandhabe (80) im wesentlichen zylindrisch ist.

17. Anhängerkupplung nach einem der Ansprüche 13 bis 16, **dadurch gekennzeichnet, dass** eine Stirnfläche (82) der Bedienhandhabe (80), an der der Bart (78) des Schlüssels (77) angeordnet ist, in dem Steckzustand des Schlüssels (77) parallel nahe bei einer Stirnfläche (83) des Schlosses (73) angeordnet ist oder daran zumindest partiell anliegt.

18. Anhängerkupplung nach Anspruch 17, **dadurch gekennzeichnet, dass** die beiden Stirnflächen (82, 83) im wesentlichen plan sind.

19. Anhängerkupplung nach einem der Ansprüche 11 bis 18, **dadurch gekennzeichnet, dass** ein Blockierteil (75) des Schlosses (73) in einer Schließstellung des Schlosses in einer Blockierstellung ist und dabei eine Verstellung des Längsbetätigungsglieds (33) in die Entriegelungsstellung blockiert.

20. Anhängerkupplung nach Anspruch 19 **dadurch gekennzeichnet, dass** das Blockierteil (75) in seiner Blockieretellung in einen Führungskanal (32) zur Führung des Längsbetätigungsglieds (33) derart vorsteht, dass es eine Verstellung des Längsbetätigungsglieds (33) in Richtung der Entriegelungsstellung blockiert.

21. Anhängerkupplung nach Anspruch 19 oder 20 **dadurch gekennzeichnet, dass** das Längsbetätigungsglied (33) außerhalb seiner Verriegelungsstellung eine Verstellung des Blockierteils (75) in den Führungskanal (32) hinein verhindert.

22. Anhängerkupplung nach einem der vorhergehenden Ansprüche, **dadurch gekennzeichnet, dass** die Steckhalterung (17) durch eine Steckaufnahme (18) gebildet ist, in die das Steckende (16) einsteckbar ist.

23. Anhängerkupplung nach einem der vorhergehenden Ansprüche, **dadurch gekennzeichnet, dass** vor den Außenumfang des kupplungsarms (12) mindestens ein Stützteil (25) seitlich vorsteht, das in eine Ausnehmung (26) neben einer Einstecköffnung (27) der Steckaufnahme (18) eingreift, wenn der Kupplungsarm (12) an dem fahrzeugseitigen Halter (11) montiert ist, und dass das mindestens eine Stützteil (25) durch einen Querbolzen (28) gebildet ist, der in eine Bohrung (29) des Kupplungsarms (12) quer zu dessen Längsrichtung (30) eingesteckt ist.

24. Anhängerkupplung nach Anspruch 23, **dadurch gekennzeichnet, dass** der Querbolzen (28) an seinem Außenumfang eine Riffelung (31) aufweist, die beim Einstecken in die Bohrung (29) zumindest teilweise gequetscht wird.

## Claims

1. Trailer coupling for motor vehicles, in particular motor cars, with a coupling arm (12) which supports at its free end (13) a head piece (14) for the releasable mounting of a trailer and which can be attached at a plugging end (16) to a plugging fixture (17) of a holder (11) which can be located on the motor vehicle, and with a locking arrangement (19) for locking the coupling arm (12) to the holder (11), wherein the locking arrangement (19) includes an operating lever (20) pivotably mounted on the coupling arm (12) and having an operating arm (90) projecting in front of the coupling arm (12) to operate a longitudinal operating element (33) which is guided on the coupling arm (12) in a longitudinal direction for movement between a release position and a locking position and wherein, in the locking position, at least one locking element (60) of the coupling arm (12) is locked to an assigned locking device (89) of the holder (11) on the vehicle, the operating lever (20) being force-coupled to the longitudinal operating element (33) via a gearing (38), **characterised in that** an end region (37) of the operating lever (20) assigned to the longitudinal operating element (33) and located opposite the operating arm (90) is provided with a toothed pinion section (36) engaging a toothed section (35) on the longitudinal operating element (33), so that the operating lever (20) acts directly on the longitudinal operating element (33).

2. Trailer coupling according to claim 1, **characterised in that** the operating lever (20) has at least one non-toothed region adjacent to the toothed pinion section (36), which acts together with a non-toothed section (57) adjacent to the toothed section (35) of the longitudinal operating element (33).

3. Trailer coupling according to claim 1 or 2, **characterised in that** the toothed section (35) of the longitudinal operating element (33) is represented by circumferential grooves (55) lined up in the longitudinal direction (30).

4. Trailer coupling according to any of the preceding claims, **characterised in that** the operating arm (90) of the operating lever (20) is rod-like.

5. Trailer coupling according to any of the preceding claims, **characterised in that** the operating lever (20) includes a rod section (44) or a rod, and **in that** an operating region (94) for operation by an operator and an effective region (92) for acting together with the gearing (38) are provided in opposite end regions (37, 93) of the rod section (44) or rod.

6. Trailer coupling according to any of the preceding claims, **characterised in that** a distance between a pivot axis and an operating region (94) of the operating lever (20) defines an operating lever length, **in that** a distance between the pivot axis and an effective region (92) for acting together with the gearing (38) defines an effective lever length, and **in that** the operating lever length is more than the effective-lever length.

7. Trailer coupling according to any of the preceding claims, **characterised in that** the operating lever (20) is rotatably mounted near an effective region (92) or in an effective region (92) for acting together with the gearing (38).

8. Trailer coupling according to any of the preceding claims, **characterised in that** the operating lever (20) is pivotably mounted on a bearing housing (39) provided on the coupling arm (12).

9. Trailer coupling according to any of the preceding claims, **characterised in that** the operating lever (20 projects laterally, in particular horizontally, in front of the coupling arm (12) at right angles to a direction in which the head piece (14) is located on the coupling arm (12).

10. Trailer coupling according to any of the preceding claims, **characterised in that** the at least one locking element (60) includes at least one ball (88) which is displaced by the longitudinal operating element (33) into its locking position and partially projects in front of an external contour of the plugging end (16) while engaging at least one recess (61) of the locking device (89) on the plugging fixture (17) on the vehicle.

11. Trailer coupling according to any of the preceding claims, **characterised in that**, for locking the coupling arm (12) at least in the state in which the coupling arm (12) is mounted on the holder (11), a lock (73) is provided on the coupling arm (12) for operation by means of a key (77) insertable into the lock (73) along an axis of insertion (79).

12. Trailer coupling according to claim 11, **characterised in that** the key (77) can only be removed from the lock in the locked position of the lock (73).

13. Trailer coupling according to claim 11 or 12, **characterised in that** the key (77) is provided with an in particular compact operating handle (80) which projects in front of the lock (73) when the key (77) is in its inserted position in the lock (73).

14. Trailer coupling according to claim 13, **characterised in that** the operating handle (80) is flat at right angles to the direction of insertion.

15. Trailer coupling according to claim 13 or 14, **characterised in that** the operating handle (80) has a substantially round or conical or stepped external contour parallel to the axis of insertion (79).

16. Trailer coupling according to any of claims 13 to 15, **characterised in that** the operating handle (80) is substantially cylindrical.

17. Trailer coupling according to any of claims 13 to 16, **characterised in that** an end face (82) of the operating handle (80) where the bit (78) of the key (77) is located is placed parallel near an end face (83) of the lock (73) or at least partially bears against it in the inserted position of the key (77).

18. Trailer coupling according to claim 17, **characterised in that** the two end faces (82, 83) are substantially planar.

19. Trailer coupling according to any of claims 11 to 18, **characterised in that** a blocking part (75) of the lock (73) is in a blocking position in a locked position of the lock, blocking a displacement of the longitudinal operating element (33) into the release position.

20. Trailer coupling according to claim 19, **characterised in that** the blocking part (75) projects into a guide channel (32) for the guidance of the longitudinal operating element (33) in its blocking position such that it blocks a displacement of the longitudinal operating element (33) towards the release position.

21. Trailer coupling according to claim 19 or 20, **characterised in that** the longitudinal operating element (33) outside its locking position prevents a displacement of the blocking part (75) into the guide channel (32).

22. Trailer coupling according to any of the preceding claims, **characterised in that** the plugging fixture (17) is represented by a socket (18) into which the plugging end (16) can be inserted.

23. Trailer coupling according to any of the preceding claims, **characterised in that** at least one supporting part (25) which engages a recess (26) adjacent to the plug-in opening (27) of the socket (18) when the coupling arm (12) is mounted on the holder (11) on the vehicle laterally projects in front of the outer circumference of the coupling arm (12), and **in that** the at least one support part (25) is represented by a cross-pin (28) inserted into a bore (29) of the coupling arm (12) at right angles to the longitudinal direction thereof.

24. Trailer coupling according to claim 23, **characterised in that** the cross-pin (28) has a corrugation (31) on its outer circumference which is at least partially crimped when it is inserted into the bore (29).

## Revendications

1. Attelage pour véhicules, en particulier automobiles, avec un bras d'attelage (12), qui porte, à son extrémité libre (13), un élément de tête (14) pour la fixation amovible d'une remorque et qui peut être attaché au niveau d'une extrémité enfichable (16) à un support d'enfichage (17) d'un élément de retenue (11) pouvant être disposé sur le véhicule, et avec un système de verrouillage (19) pour le verrouillage du bras d'attelage (12) sur l'élément de retenue (11), le système de verrouillage (19) contenant un levier d'actionnement (20) monté de manière pivotante sur le bras d'attelage (12), présentant un bras d'actionnement (90) en saillie devant le bras d'attelage (12) et servant à actionner un organe d'actionnement longitudinal (33), qui peut être déplacé de manière guidée dans un sens longitudinal (30) au niveau du bras d'attelage (12) entre une position de déverrouillage et une position de verrouillage et au moins un élément de verrouillage (60) du bras d'attelage (12) étant verrouillé dans la position de verrouillage avec un dispositif de verrouillage (89) associé de l'élément de retenue (11) côté véhicule, le levier d'actionnement (20) étant couplé par force à l'organe d'actionnement longitudinal (33) par le biais d'une transmission dentée (38), **caractérisé en ce qu'**une section dentée de pignon (36) est prévue au niveau d'une zone d'extrémité (37) du levier d'actionnement (20) associée à l'organe d'actionnement longitudinal (33) et opposée au bras d'actionnement (90), laquelle section engrène avec une section dentée (35) sur l'organe d'actionnement longitudinal (33) de sorte que le levier d'actionnement (20) agit directement sur l'organe d'actionnement longitudinal (33).

2. Attelage selon la revendication 1, **caractérisé en ce que** le levier d'actionnement (20) présente au moins une zone non dentée située à côté de la section dentée de pignon (36), qui coopère avec au moins une zone non dentée (57) située à côté de la section dentée (35) de l'organe d'actionnement longitudinal (33).

3. Attelage selon la revendication 1 ou 2, **caractérisé en ce que** la section dentée (35) de l'organe d'actionnement longitudinal (33) est formée d'une succession de rainures périphériques (55) situées côte à côte dans le sens longitudinal (30).

4. Attelage selon l'une des revendications précédentes, **caractérisé en ce que** le bras d'actionnement (90) du levier d'actionnement (20) est de type tige.

5. Attelage selon l'une des revendications précédentes, **caractérisé en ce que** le levier d'actionnement (20) comprend une section tige (44) ou une tige et **en ce qu'**une zone d'actionnement (94) pour l'actionnement par un opérateur et une zone de travail (92) pour la coopération avec la transmission dentée (38) sont prévues au niveau de zones d'extrémité (37, 93) opposées l'une à l'autre de la section tige (44) ou de la tige.

6. Attelage selon l'une des revendications précédentes, **caractérisé en ce qu'**une distance entre un axe de pivotement et une zone d'actionnement (94) du levier d'actionnement (20) définit une longueur du levier d'actionnement, **en ce qu'**une distance entre l'axe de pivotement et une zone de travail (92) coopérant avec la transmission dentée (38) définit une longueur active du levier et **en ce que** la longueur du levier d'actionnement est supérieure à la longueur active du levier.

7. Attelage selon l'une des revendications précédentes, **caractérisé en ce que** le levier d'actionnement (20) est monté de manière rotative à proximité d'une zone de travail (92) ou au niveau d'une zone de travail (92) pour coopérer avec la transmission dentée (38).

8. Attelage selon l'une des revendications précédentes, **caractérisé en ce que** le levier d'actionnement (20) est monté de manière pivotante au niveau d'un boîtier formant palier (39) prévu sur le bras d'attelage (12).

9. Attelage selon l'une des revendications précédentes, **caractérisé en ce que** le levier d'actionnement (20) est en saillie latérale, en particulier horizontale, devant le bras d'attelage (12) transversalement à une direction, dans laquelle l'élément de tête (14) est disposé que le bras d'attelage (12).

10. Attelage selon l'une des revendications précédentes, **caractérisé en ce que** l'au moins un élément de verrouillage (60) comprend au moins une boule (88), qui est repoussée par l'organe d'actionnement longitudinal (33) dans sa position de verrouillage et est partiellement en saillie devant un contour extérieur de l'extrémité enfichable (16) et vient en prise ce faisant dans au moins un évidement (61) du dispositif de verrouillage (89) au niveau du support d'enfichage (17) côté véhicule.

11. Attelage selon l'une des revendications précédentes, **caractérisé en ce qu'**une serrure (73), qui peut être actionnée avec une clé (77) pouvant être enfichée le long d'un axe d'enfichage (79) dans la serrure (73), est disposée au niveau du bras d'attelage (12) pour la fermeture du bras d'attelage (12) du moins lorsque le bras d'attelage (12) est monté sur l'élément de retenue (11).

12. Attelage selon la revendication 11, **caractérisé en ce que** la clé (77) peut uniquement être retirée de la serrure lorsque la serrure (73) est en position fermée.

13. Attelage selon la revendication 11 ou 12, **caractérisé en ce que** la clé (77) présente une manette de commande (80) en particulière compacte, qui fait saillie devant la serrure (73) lorsque la clé (77) est enfichée dans la serrure (73).

14. Attelage selon la revendication 13, **caractérisé en ce que** la manette de commande (80) est plate transversalement à la direction d'enfichage.

15. Attelage selon la revendication 13 ou 14, **caractérisé en ce que** la manette de commande (80) présente un contour extérieur sensiblement rond ou conique ou étagé parallèlement à l'axe d'enfichage (79).

16. Attelage selon l'une des revendications 13 à 15, **caractérisé en ce que** la manette de commande (80) est sensiblement cylindrique.

17. Attelage selon l'une des revendications 13 à 16, **caractérisé en ce qu'**une face avant (82) de la manette de commande (80), au niveau de laquelle est disposé le panneton (78) de la clé (77), est orientée parallèlement et à proximité d'une face avant (83) de la serrure (73), lorsque la clé (77) est enfichée, ou s'appuie au moins en partie contre celle-ci.

18. Attelage selon la revendication 17, **caractérisé en ce que** les deux faces avant (82, 83) sont sensiblement planes.

19. Attelage selon l'une des revendications 11 à 18, **caractérisé en ce qu'**un élément de blocage (75) de la serrure (73) dans une position de fermeture de la serrure est dans une position de blocage et bloque ce faisant un déplacement de l'organe d'actionnement longitudinal (33) dans la position de déverrouillage.

20. Attelage selon la revendication 19, **caractérisé en ce que** l'élément de blocage (75) dans sa position de blocage est en saillie dans un canal de guidage (32) pour le guidage de l'organe d'actionnement longitudinal (33) de telle manière qu'il bloque un déplacement de l'organe d'actionnement longitudinal (33) en direction de la position de déverrouillage.

21. Attelage selon la revendication 19 et 20, **caractérisé en ce que** l'organe d'actionnement longitudinal (33) empêche, en dehors de sa position de verrouillage, un déplacement de l'élément de blocage (75) dans le canal de guidage (32).

22. Attelage selon l'une des revendications précédentes, **caractérisé en ce que** le support d'enfichage (17) est formé d'un logement d'enfichage (18) dans lequel l'extrémité enfichable (16) peut être enfichée.

23. Attelage selon l'une des revendications précédentes, **caractérisé en ce qu'**au moins un élément d'appui (25) est en saillie latérale devant la périphérie extérieure du bras d'attelage (12), lequel élément est en prise dans un évidement (26) à côté d'une ouverture d'enfichage (27) du logement d'enfichage (18), lorsque le bras d'attelage (12) est monté sur l'élément de retenue (11) côté véhicule, et **en ce que** l'au moins un élément d'appui (25) est formé d'une broche transversale (28), qui est enfichée dans un alésage (29) du bras d'attelage (12) transversalement à son sens longitudinal (30).

24. Attelage selon la revendication 23, **caractérisé en ce que** la broche transversale (28) présente sur sa périphérie extérieure un striage (31), qui est au moins partiellement écrasé lors de l'enfichage dans l'alésage (29).
